# FASCICULE DE BREVET EUROPEEN

(11) **EP 2 784 896 B1**
(45) Date de publication et mention de la délivrance du brevet: **31.01.2018**
(21) Numéro de dépôt: 14162064.1
(22) Date de dépôt: 27.03.2014
(51) Int. Cl.: H02J 3/14, H02J 7/00, H02J 3/38, H02J 3/00

(54) **Système de gestion de la production et de la consommation d'électricité**
System zur Steuerung der Stromerzeugung und des Stromverbrauchs
System for managing electricity production and consumption

(30) Priorité: 28.03.2013 FR 1352808; 11.07.2013 FR 1356819
(43) Date de publication de la demande: 01.10.2014
(73) Titulaire: Comwatt, 34960 Montpellier (FR)
(72) Inventeur: Lamotte, Grégory, Gustave, 34170 Castelnau le Lez (FR)
(74) Mandataire: Rhein, Alain

(56) Documents cités:
- DE-A1-102011 051 074
- DE-A1-102011 082 840
- JP-A- 2005 124 341
- US-A1- 2012 101 652

## Description

La présente invention entre dans le domaine de la gestion énergétique, en particulier dans le contrôle de la production et la consommation d'électricité.

L'invention concerne particulièrement un système de gestion de la production et de la consommation d'électricité.

Un tel système trouvera une application préférentielle, mais aucunement limitative, auprès des entreprises et des particuliers dont les sites sont, d'une part, raccordé au réseau d'approvisionnement électrique et, d'autre part, équipés de moyens de production d'électricité, notamment par conversion du rayonnement solaire au moyen de panneaux photovoltaïques.

On notera que le site peut être équipé de tout autre moyen de production d'électricité, à savoir éolien, thermique ou hydraulique.

De manière connue, les besoins en électricité sont en constante augmentation, du fait de besoins toujours plus importants, et les coûts de consommation tendent à augmenter. Cette conjoncture engendre l'investissement auprès des professionnels comme des particuliers dans des solutions de production d'électricité à partir d'énergie renouvelable, comme le rayonnement solaire.

Toutefois, un inconvénient majeur de ce choix de production solaire, réside dans les périodes de production, durant la journée. De plus, l'énergie électrique est difficilement stockable, entrainant une perte conséquence lors du chargement et du déchargement des batteries. A l'inverse, la majeure partie des besoins en électricité se situent en soirée, à l'opposé de cette période de production en journée.

A ce titre, la figure A représente un schéma classique de la consommation journalière par heure d'un site équipé de panneaux photovoltaïques. On constate que la production, en gris clair, croit de sept heure jusqu'à treize heure pour diminuer jusque vingt heure, alors que la consommation, en gris foncé, s'étale sur la totalité des vingt-quatre heures. Il ressort que la production dépasse la consommation en journée, alors qu'aucune production n'est présente la nuit alors que la consommation reste importante.

Dès lors, entre les deux périodes se crée une perte, essentiellement financière, du fait que l'énergie consommée présente un coût plus élevé que l'énergie produite sur site et, éventuellement revendue au gestionnaire du réseau d'approvisionnement. Si cette perte est actuellement compensée par des subventions, à l'avenir, l'augmentation des besoins en électricité tendra à réduire cette compensation.

De ce constat, il a été imaginé de surveiller et mesurer la production et la consommation d'électricité, puis d'intervenir sur cette dernière, afin d'au moins partiellement la décaler dans le temps pour qu'elle coïncide au mieux avec la période de production.

Actuellement, il existe de nombreux systèmes de gestion de la consommation d'électricité d'un site.

Le document EP 2 535 685 décrit un système de surveillance de la consommation en électricité de chacun des appareils d'un site. Cette surveillance permet alors à l'utilisateur d'être informé et d'intervenir lui-même sur la consommation d'un appareil donné.

De façon automatique, le document US 2011/0060474 décrit un système qui permet de mesurer la production et la consommation d'électricité, en particulier la consommation globale de tous les appareils dudit site, sous forme d'une unité de consommation. Concernant la gestion, un tel système envisage de limiter automatiquement l'approvisionnement en électricité de ladite unité, afin de conserver une balance équilibrée avec la production.

Un inconvénient d'un tel système réside dans le fait qu'il ne différencie aucunement les différents appareils et leur consommation, dépendant de leur type de fonctionnement et de leur priorité de fonctionnement. En somme, certains appareils peuvent fonctionner avec un approvisionnement moindre, réparti sur un période plus longue, de façon discontinue, alors que d'autres nécessitent un approvisionnement important, générant un pic de consommation, qu'il n'est pas possible de repousser temporellement.

Afin de pallier ces inconvénients, le système décrit dans le document EP 0 727 668 prévoit de gérer la consommation de chaque appareil d'un site, au regard de la consommation globale, en vue de ne pas dépasser la limite maximale autorisée dans le contrat d'approvisionnement. Pour ce faire, chaque appareil est équipé de moyens de contrôle de leur consommation, connectés et communiquant avec des moyens de gestion centralisée. La gestion se fait de manière automatique, de manière à diminuer indépendamment et de façon distincte la consommation de chaque appareil. Cette gestion fait notamment intervenir des degrés de priorités entre différents appareils, comme par exemple un four qui se retrouve prioritaire par rapport à un lave-vaisselle. Ainsi, ce système permet de gérer de façon intelligente le fonctionnement et la consommation de chaque appareil, au regard d'une consommation globale du site.

Toutefois, un tel système ne prend pas en compte un site équipé d'une production d'électricité et dont l'apport est limité sur une durée. Il ne permet pas de gérer dans le temps les besoins en consommation de chaque appareil en fonction de ses caractéristiques propres.

D'autres systèmes envisagent de décaler dans le temps le fonctionnement ou de diviser les cycles de fonctionnement de certains appareils, afin de les faire correspondre au moment où le coût énergétique est le moins élevé. Toutefois, ces systèmes n'intègrent pas la totalité des appareils de façon distincte et indépendante, en fonction de leurs caractéristiques propres de fonctionnement, en rapport avec une production sur site. De telles solutions sont notamment décrites dans les documents DE 10 2011 051074, WO 2008/006192 et EP 2 219 278.

De plus, ces solutions ne permettent pas de gérer au mieux la consommation des équipements, en particulier leur consommation en fonctionnement, dépendant du temps pendant lequel se déchargent leur batterie pour des appareils autonomes.

L'invention a pour but de pallier les inconvénients de l'état de la technique. Ainsi, l'invention prévoit d'automatiquement faire varier la puissance et les horaires de consommation de certains appareils ou installations présents sur le site, là où il serait difficilement envisageable de l'effectuer manuellement.

L'invention est définie par la revendication 1. Des modes de réalisation de l'invention sont définis aux revendications 2 et 3.

Pour ce faire, le système est constitué de moyens de mesure de la production et de la consommation électriques de chacun des différents équipements, lesdits moyens de mesure étant reliés de façon communicante avec des moyens centralisés de contrôle qui analysent les données mesurées et transmettent des commandes de gestion de la consommation vers chacun desdits équipements.

De plus, un tel système prévoit plusieurs niveaux distincts de contrôle afin, d'une part, de simplement déplacer temporellement le fonctionnement de certains équipements pour l'activer à un moment opportun, pendant la période de production d'électricité, d'autre part, de modifier la puissance de consommation de certains appareils, pour empêcher si possible que la consommation dépasse la quantité d'électricité produite pendant la période de production et, d'autre part encore, en vue de la répartir plus uniformément sur une période donnée, notamment pendant la durée de production.

Pour ce faire, l'invention définit précisément les caractéristiques de fonctionnement de chaque appareil, pour attribuer une jauge virtuelle pour chaque appareil. Une telle jauge permet de connaître l'état d'un appareil à un moment donné, mais aussi de prévoir ses besoins ultérieurs, anticipant ses futures consommations électriques. L'attribution de jauges virtuelles confère donc un caractère prédictif au système selon l'invention.

Ainsi, l'invention concerne un système (1) de gestion de la production et de la consommation d'électricité, sur un site (2) comprenant :
- des équipements de production électrique reliés à une alimentation,
- des appareils dont le fonctionnement génère une consommation électrique et reliés à ladite alimentation comprenant des appareils autonomes alimentés par des batteries rechargeables définis par une autonomie et un temps de chargement, et des appareils à fonctionnement continu ou discontinu nécessitant une connexion électrique permanente définis par une autonomie, l'autonomie correspondant à un cycle de fonctionnement, lesdits appareils étant classés dans quatre catégories qui sont les suivantes:
   a) les appareils à utilisation régulière dont le fonctionnement est soumis directement à une action d'un utilisateur et ne peut être décalé dans le temps ;
   b) les appareils à utilisation ponctuelle dont le fonctionnement peut être décalé dans le temps d'un faible laps temporel et soumis à l'action de l'utilisateur ;
   c) les appareils à utilisation prolongée dont le fonctionnement peut être totalement décalé dans le temps et réparti sur des plages horaires totalement différentes ;
   d) les appareils dont l'utilisation permet d'emmagasiner de l'énergie et de stocker ladite énergie au moins provisoirement,
   ces différentes catégories permettant de classer les appareils en fonction de leur degré de priorité de fonctionnement ;
   ledit système comprenant:
   - des capteurs de mesure de la quantité d'électricité produite par chaque équipement de production électrique,
   - des actionneurs de mesure de la quantité d'électricité consommée par chaque appareil, lesdits actionneurs étant pourvus de moyens de variation de la puissance sur une période de chaque appareil,
   - des moyens de contrôle de façon indépendante des moyens de variation de chacun desdits actionneurs, lesdits moyens de contrôle envoyant vers les moyens de variation de chaque actionneur des commandes de variation de la puissance de chaque appareil sur une période, ladite puissance et ladite période étant déterminées en fonction de la quantité mesurée d'électricité produite par rapport à la quantité mesurée d'électricité consommée, ainsi qu'en fonction des degrés de priorités,
   - lesdits moyens de contrôle étant aptes à gérer l'autonomie des appareils nécessitant une connexion électrique permanente et à gérer l'autonomie et le temps de chargement des appareils autonomes en appliquant une jauge virtuelle pour connaître l'état de charge et/ou de fonctionnement de chaque appareil à un moment donné, l'augmentation ou la diminution de la valeur de ladite jauge virtuelle s'effectuant en fonction du degré de priorité appliqué à chaque appareil, des mesures de production et de consommation d'électricité sur une période donnée, et en fonction soit de l'autonomie d'un appareil nécessitant une connexion électrique permanente soit de l'autonomie dépendant du temps de chargement d'un appareil autonome, et du temps écoulé de fonctionnement, ladite jauge dépendant en outre d'au moins une catégorie auquel l'appareil est affilié et d'au moins un aspect de fonctionnement continu ou discontinu dudit appareils ;
   ledit système étant apte à gérer, lorsque la production par les équipements dépasse la consommation par les appareils dont le fonctionnement génère une consommation électrique, le déclenchement d'au moins un appareil à même de consommer un surplus d'électricité, et de la stocker sous une forme énergétique différente, en particulier sous forme de chaleur notamment d'eau chaude, voire de glace sous forme de gaz comprimé,
   et, pour les appareils autonomes, au moins trois modes peuvent être appliqués à une jauge virtuelle :
   - une augmentation jusqu'à la totalité de la jauge correspondant à une obligation de recharger l'appareil pour obtenir son autonomie maximale,
   - une augmentation de manière à maintenir au minimum un niveau partiel de la jauge pour obtenir une autonomie minimale,
   - ou bien un rechargement uniquement lorsque la jauge atteint son niveau le plus bas correspondant à un déchargement total des batteries dudit appareil.

Dès lors, l'invention permet d'effectuer une gestion intelligente et configurable du fonctionnement et de l'état de chargement des différents équipements, lissant les pics de consommation et répartissant cette dernière plus uniformément, en particulier en fonction de la période de production ou du maximum de consommation supportable par le site.

Selon d'autres caractéristiques additionnelles, non limitatives, les moyens de contrôle, lesdits actionneurs et lesdits capteurs peuvent comprendre des moyens de communication avec lesdits moyens de contrôle au travers d'un réseau sans fil, d'un réseau filaire indépendant ou bien par courants porteurs en ligne.

Avantageusement, les degrés de priorité peuvent être déterminés par une pondération du fonctionnement de chacun desdits appareils en quantité d'électricité consommée et en temps, par rapport à leurs caractéristiques propres de fonctionnement.

De préférence, ladite pondération est configurable au moins partiellement par un utilisateur dudit site.

En outre, l'invention gère, lorsque la production dépasse la consommation, le déclenchement d'équipements à même de consommer ce surplus d'électricité et de le stocker sous une forme énérgetique différente, en particulier sous forme de chaleur, notamment d'eau chaude, voire de glace, sous forme de gaz comprimé ou autre système de stockage, s'affranchissant de l'utilisation de batteries coûteuses, avec un rendement moindre et très difficilement recyclables.

Dans le cas inverse, lorsque la consommation dépasse la production, alors l'invention commande une gestion intelligente de la consommation de chaque équipement, en vue de répartir dans le temps, selon des degrés de priorités, leur fonctionnement et/ou leur rechargement. L'intelligence de cette gestion réside dans la façon de gérer temporellement la consommation par rapport à la production, de sorte que la première ne dépasse pas la seconde.

D'autres caractéristiques et avantages de l'invention ressortiront de la description détaillée qui va suivre des modes de réalisation non limitatifs de l'invention, en référence aux figures annexées, dans lesquelles :
- la figure 1 représente un schéma reprenant sur une journée l'exemple de la production et de la consommation d'électricité de la figure A, modifiées lors de la mise en oeuvre d'un mode de fonctionnement du système selon l'invention ; et
- la figure 2 représente une vue schématisée de l'architecture du système selon l'invention selon un exemple d'implantation au sein d'un bâtiment.

La présente invention concerne un système 1 de gestion de la production et de la consommation d'électricité.

Un tel système 1 sera implanté sur un site 2, par exemple un bâtiment tel une entreprise appartenant à un professionnel ou une maison appartenant à un particulier, voire un immeuble avec plusieurs logements ou un lotissement de plusieurs bâtiments.

Un site 2 peut être pourvu d'une alimentation 3 à un réseau électrique 4, mais il peut aussi être énergétiquement indépendant, n'étant pas raccordé à un réseau extérieur et produisant seul son électricité, notamment en raison d'une implantation géographique spécifique et difficile à approvisionner. Une telle alimentation 3 permet d'approvisionner en électricité ledit site 2 et de décompter la quantité d'énergie consommée, dans le cadre d'une prestation de fourniture d'énergie proposée par le gestionnaire dudit réseau d'approvisionnement en électricité.

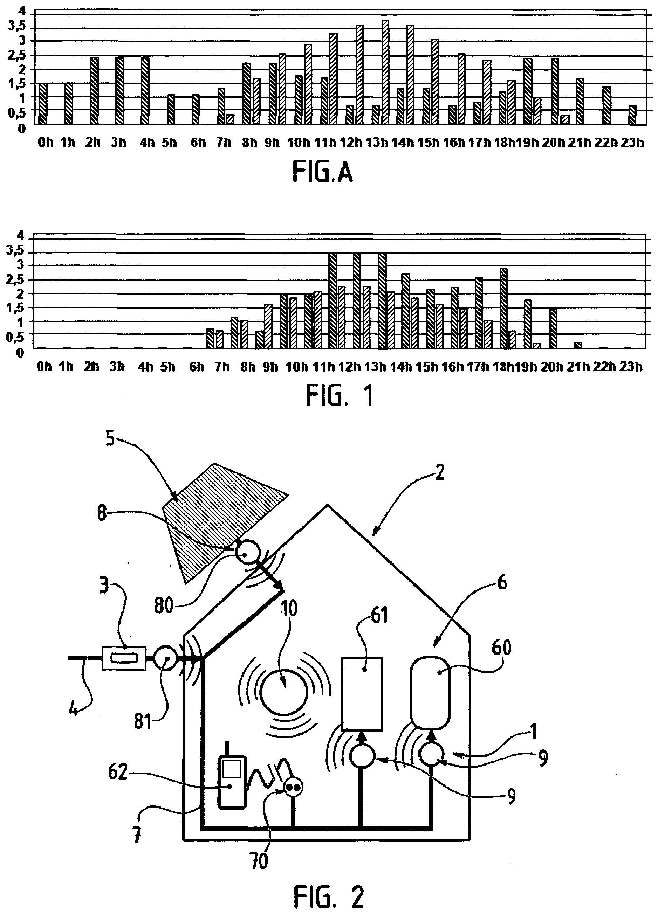

De plus, d'une part, ledit site 2 comprend des équipements de production électrique 5. Ces derniers peuvent être de différents types et permettent de produire de l'énergie électrique par conversion, notamment d'une énergie renouvelable comme le rayonnement solaire, le vent ou l'écoulement hydraulique. Dans l'exemple de mise en oeuvre, représenté sur la figure 2, les équipements 5 peuvent être constitués de panneaux photovoltaïques.

En outre, ces équipements 5 peuvent être reliés à ladite alimentation 3, notamment par l'intermédiaire de lignes internes 7 au site 2, formant un réseau privatif. Dès lors, l'électricité produite peut être, selon les cas, envoyés vers le réseau privatif ou le réseau d'approvisionnement 4. Des moyens adaptés permettent de convertir l'électricité produite afin qu'elle puisse être envoyée vers l'un ou l'autre desdits réseaux. Dans le cas de l'envoi vers le réseau 4, l'électricité peut alors être revendue auprès dudit gestionnaire.

D'autre part, le site 2 comprend des appareils 6 dont le fonctionnement génère une consommation électrique. Pour ce faire, lesdits appareils 6 sont eux aussi reliés à ladite alimentation 3. Comme évoqué précédemment, selon les cas, les appareils 6 consomment l'électricité produite par les équipements 5 ou bien provenant directement du réseau d'approvisionnement 4, voire des deux à la fois.

On notera que les appareils 6 peuvent comprendre tout type d'installation, équipée d'une connexion d'alimentation électrique, selon le voltage des réseaux, en particulier du réseau privatif. Cette alimentation électrique permet, soit d'assurer le fonctionnement en direct de l'appareil, de façon continue ou discontinue, soit d'assurer le rechargement de moyens de stockage, tels des accumulateurs ou des batteries, en vue d'une utilisation indirecte, ledit appareil 6 étant alors déconnecté du réseau électrique lors de son fonctionnement. Au sens de la présente invention, le fonctionnement inclut l'un et l'autre de ces types d'alimentation directe ou indirecte.

A titre non exhaustif, les appareils 62 à fonctionnement autonome, sur batterie, peuvent être des ordinateurs portatifs, des téléphones cellulaires ou sans fil, des appareils électroménagers autonomes, de l'outillage, des luminaires.

Les autres appareils 6 nécessitent donc une connexion électrique permanente, en vue d'une alimentation en continu pendant leur fonctionnement, comme un four ou des plaques de cuissons, une machine à laver ou un sèche-linge, une chaudière, des radiateurs, un accumulateur d'eau, une climatisation, etc. Ce fonctionnement peut être continu, par exemple pour certains types de chauffage pendant la période hivernale, comme discontinu, à intervalles de temps régulier ou en fonction de leur utilisation, comme c'est le cas de réfrigérateur ne fonctionnant que pendant le temps nécessaire pour atteindre une température donnée et qui peut être conservée pendant une durée variable, du fait son isolation.

Sur l'exemple de la figure 2, deux appareils 6 sont schématisés et peuvent être un ballon 60 accumulateur d'eau chaude et un réfrigérateur 61.

Avantageusement, l'invention envisage de mesurer l'électricité qui transite et qui est produite mais aussi consommée, en vue d'interagir sur cette consommation sur un site. Dans le cas où le site est composé de plusieurs bâtiments tous les appareils 6 et les équipements 5 sont gérés comme si ils appartenaient à un seul ensemble qui équilibre en permanence sa production, ses limitations et sa consommation globale d'énergie.

Pour ce faire, ledit système 1 de gestion comprend tout d'abord des capteurs 8 de mesure de quantités d'électricité consommée ou produite. Ainsi, des capteurs 80 mesurent la quantité d'électricité produite par chaque équipement de production 5. Dès lors, ces capteurs 80 sont positionnés au niveau de chaque équipement 5 ou de la ligne reliant les différents équipements 5 et envoyant l'électricité produite vers l'alimentation 3, où elle sera redistribuée vers l'un ou l'autre des réseaux.

Par ailleurs, des capteurs 81 peuvent mesurer la quantité d'électricité consommée ou produite réciproquement depuis ou vers ledit réseau 4 d'approvisionnement. Dès lors, ces capteurs 81 sont positionnés au niveau de ladite alimentation 3.

Selon un mode préférentiel de réalisation, lesdits capteurs 8 peuvent être constitués au moins en partie de moyens de mesure de l'ampérage, notamment sous la forme de pince ampèremétrique.

Ensuite, ledit système 1 comprend des actionneurs 9 peuvent aussi être positionnés au niveau de chaque appareil 6, afin de mesurer la quantité d'électricité réellement consommée.

On notera que ces capteurs 8 et ces actionneurs 9 permettent notamment, par comparaison de leurs mesures respectives, de détecter des pertes d'électricité sur le réseau privatif ou bien des dysfonctionnements de certains appareils 6.

De plus, lesdits actionneurs 9 sont pourvus de moyens de variation de la puissance sur une période de chaque appareil 6. En somme, chaque actionneur 9 peut augmenter ou diminuer, voir bloquer totalement en jouant le rôle d'un interrupteur, la puissance envoyée par le réseau privatif audit appareil 6. En outre, cette régulation s'effectue sur un intervalle temporel déterminé.

A titre d'exemple, le fonctionnement de moyens de stockage d'eau chaude, comme un cumulus, peut être réglé simplement par son approvisionnement en électricité. Pour atteindre la même température de consigne de l'eau, le temps de chauffage peut être augmenté en diminuant la puissance des résistances, ou inversement, en fonction de la consommation et de la production du site. Dans le cas d'un cumulus consommant habituellement 3000 Watts, il est possible de réduire sa consommation à 1000 Watts mais sur une période supérieure à trois fois la période habituelle, mais tout en restant durant cette durée, sous le seuil de production, alors que le chauffage maximum habituel aurait fait dépasser la consommation par rapport à la production.

A ce titre, l'invention prévoit d'optimiser la consommation électrique au regard de la production d'électricité, en particulier en réduisant ou augmentant sur une durée calculée à un moment précis de la journée, la puissance dédiée à chaque appareil 6.

Toutefois, dans le cas où la production deviendrait inférieure à la consommation, le système 1 prévoit de pouvoir alimenter le réseau privatif par l'intermédiaire du réseau d'approvisionnement 4.

Pour ce faire, ledit système 1 comprend des moyens 10 de contrôle de façon indépendante des moyens de variation de chacun desdits actionneurs 9.

Dès lors, de préférence, lesdits actionneurs 9 et lesdits capteurs 8 comprennent des moyens de communication avec lesdits moyens de contrôle 10 au travers d'un réseau. Ce dernier peut être sans fil, notamment de type hertzien à courte ou moyenne portée, mais il peut aussi s'agir d'un réseau filaire indépendant, tel un intranet ou bien encore une communication utilisant le câblage électrique du site en utilisant les courants porteurs en ligne (CPL). Dans l'exemple de la figure 2, ce réseau de communication est prévu sans fil par ondes hertziennes.

Avantageusement, lesdits moyens de contrôle 10 envoient vers les moyens de variation de chaque actionneur 9 des commandes de variation de la puissance de chaque appareil 6 sur une période. De plus, ladite puissance et ladite période sont déterminées en fonction de la quantité mesurée d'électricité produite par rapport de la quantité mesurée d'électricité consommée, ainsi qu'en fonction de degrés de priorités.

En effet, une première démarche de l'invention a consisté à analyser les fonctionnements des différents types d'appareils et leur consommation électrique, en vue de déterminer des catégories autorisant plus ou moins le décalage de leur fonctionnement dans le temps. L'invention a permis de définir au moins quatre catégories, à savoir :
- les appareils à utilisation régulière dont le fonctionnement est soumis directement à une action de l'utilisateur et ne peut être décalé dans le temps, comme le matériel audio-vidéo, informatique fixe, l'éclairage, les appareils de cuissons comme un four ou une plaque électrique ;
- les appareils à utilisation ponctuelle dont le fonctionnement peut être décalé dans le temps, mais d'un faible laps temporel, mais qui restent soumis à l'action de l'utilisateur, comme le lave-linge ou lave-vaisselle, le chauffage électrique ;
- les appareils à utilisation prolongée dont le fonctionnement peut être décalé totalement décalé dans le temps et réparti sur des plages horaires totalement différentes, comme un réfrigérateur ou un congélateur, une climatisation, la gestion d'un bassin ou d'une piscine en particulier ses opérations de traitement de l'eau, mais aussi le matériel informatique portable dont le rechargement peut être repoussé en fonction de l'utilisation faite ; et
- les appareils dont l'utilisation permet d'emmagasiner de l'énergie et de la stocker, au moins provisoirement, comme un cumulus d'eau chaude, des batteries notamment d'un véhicule électrique, mais aussi certains autres appareils susmentionnés des catégories précédentes, comme un ordinateur portable.

Ces différentes catégories permettent de classer les appareils en fonction de leur priorité de fonctionnement.

En somme, une importance peut être donnée à un appareil spécifique 6 si sont fonctionnement est nécessaire, voire primordial, comme ça peut être le cas d'un appareil de cuisson ou, à moindre mesure, d'un chauffage en période hivernale ou bien du maintien de la température de consigne d'un réfrigérateur. Dès lors, le degré appliqué pourra être élevé pour ce type d'appareil 6 et surpasser d'autres appareils dont le fonctionnement est de moindre importance.

Dès lors, les degrés de priorité peuvent être déterminés par une pondération du fonctionnement de chacun desdits appareils 6 en quantité d'électricité consommée et en temps, par rapport à leurs caractéristiques propres de fonctionnement.

En d'autres termes, concernant la pondération, il est possible de limiter le fonctionnement de différents appareils 6, en leur appliquant un degré moindre, pour favoriser d'autres appareils dont le fonctionnement est requis, voire obligatoire, en leur appliquant un degré plus important. Ces différents degrés d'importance sont appliqués pour un laps de temps donné, dépendant de chaque appareil 6 et propre à son fonctionnement. Lesdits degrés peuvent ensuite être modifiés, à la fin d'un cycle de fonctionnement d'un appareil 6, pour donner un degré plus important à un appareil non essentiel.

En reprenant l'exemple du réfrigérateur 61 et du ballon chauffe-eau 60, ce dernier peut avoir une importance moindre que le réfrigérateur 61 pendant certaines périodes de la journée, aux heures des repas qui entrainent des ouvertures et donc une hausse de la température de consigne. Toutefois, une fois fermé, ledit réfrigérateur 61 peut conserver une température interne satisfaisante pendant une durée déterminée, dépendant de sa structure et propre à chaque constructeur. Dès lors, en dehors des heures de repas, le réfrigérateur 61 peut recevoir un degré moins élevé, à savoir que son degré est diminué par rapport au degré du ballon 60.

Par ailleurs, ce dernier peut avoir un degré dépendant d'autres paramètres, étant donné qu'il nécessite une quantité d'électricité plus importante pour, d'une part, chauffer l'eau et, d'autre part, la maintenir constamment à la température désirée. Dès lors, la consommation de ce ballon 60 peut être totalement décalée temporellement pour n'intervenir que pendant la période de production d'électricité et, éventuellement, sur d'autres moments de la journée comme en début de matinée dans le cas de consommation d'eau chaude par les occupants au réveil. Le degré d'importance du ballon peut aussi être augmenté pendant la période de production, d'une part, afin d'obtenir une consommation totale atteignant la production et, aussi, convertir cette électricité produite et consommée en une énergie de réserve, sous forme de chaleur. Cette dernière pourra ensuite être utilisée ultérieurement, limitant les pertes. En particulier, dans le cas du stockage d'eau chaude, cette dernière peut être injectée au sein d'appareils habituellement approvisionnés en eau froide ou à température ambiante et qui effectuent le chauffage de l'eau au cours de leur fonctionnement, comme par exemple un lave-vaisselle ou un lave-linge. L'approvisionnement en eau chaude permet alors de s'affranchir ou de diminuer l'étape de chauffage, économisant d'autant la consommation y relative.

Un autre exemple peut être un lave-linge dont la mise en route sera automatiquement repoussée dans le temps, jusqu'à une plage temporelle de consommation moindre, profitant de cette différence positive comparée à la production. De même, les différents cycles de lavage peuvent influencer la consommation de cet appareil 6 et peuvent donc être pris en compte par le système 1 selon l'invention.

Dans ce contexte, ledit système 1 prévoit aussi que ladite pondération peut être configurable au moins partiellement par un utilisateur dudit site 2. En somme, il est possible d'augmenter ou de diminuer le degré de priorité de l'un ou l'autre des équipements 6, en fonction de leurs utilisations actuelles ou futures. Ainsi, il est possible d'envisager d'augmenter manuellement le degré de priorité d'un appareil 6 qu'on souhaite utiliser prochainement, ou inversement.

En outre, cette configuration peut s'effectuer directement lors de l'actionnement par l'utilisateur, comme c'est le cas pour les appareils relevant de ladite première catégorie d'utilisation régulière, ou bien des appareils dont le démarrage est forcé par l'utilisateur. Dans ce dernier cas, une première mise en route génère un décalage dans le temps, mais l'utilisation peut actionner une nouvelle fois l'appareil en vue de commander immédiatement le début de son fonctionnement, comme par exemple dans le cas d'un lave-linge se mettant en pause automatiquement lors de son lancement mais que l'utilisateur peut forcer à débuter son cycle de lavage.

Une autre caractéristique réside dans le fait que les caractéristiques propres d'au moins un appareil 6 consistent au moins en l'autonomie et le temps de chargement.

Tout d'abord, l'autonomie est le temps pendant lequel un appareil 6 fonctionne correctement ou de façon optimale. Cette autonomie peut s'entendre comme une période de fonctionnement à une puissance donnée, avec la consommation associée, à savoir correspondant à un cycle de fonctionnement, ou bien une période de fonctionnement sans consommation si l'appareil 6 n'est pas approvisionné, comme c'est le cas d'un appareil autonome 62, à savoir alimenté par des batteries rechargeables.

Cette autonomie peut aussi être étendue au temps de fonctionnement d'un appareil 6, alimenté en permanence, ladite autonomie pouvant correspondre alors à un cycle de fonctionnement.

De plus, le temps de chargement correspond à la durée nécessaire pour que l'appareil 6 fonctionne correctement ou bien qu'il recharge partiellement ou totalement ses batteries. Dès lors, le temps de chargement se limite à un appareil 6 fonctionnant sur batterie, n'englobant pas les appareils 6 alimentés en permanence.

On notera que, selon l'invention, l'autonomie englobe dès lors les appareils connectés en permanence au réseau privatif, mais dont le fonctionnement est limité à des périodes précises, ainsi que des appareils autonomes 62. Le temps de chargement englobe uniquement les appareils autonomes, fonctionnant sur batterie.

On notera que lesdits appareils peuvent avoir un fonctionnement présentant un aspect continu, qu'il n'est pas possible de diviser au cours de leur cycle, ou bien un aspect discontinu, à savoir qui peut être divisé en plusieurs plages temporelles séparées par des laps de temps de différentes durées.

A titre d'exemple, la filtration de bassin de piscine nécessite une durée journalière de fonctionnement, sur plusieurs heures, mais qui peut être divisée en périodes temporellement identiques réparties à intervalles réguliers sur la journée. Il est ainsi possible de faire correspondre chaque période avec des moments où la consommation électrique est moindre et la production plus élevée.

A l'inverse, un lave-vaisselle est considéré comme un appareils à fonctionnement continu puisque son bon fonctionnement nécessite obligatoirement l'arrivée en fin de cycle, sans interruption.

Ainsi, l'invention a pour particularité de prendre en compte la consommation et la production, mais aussi les catégories des appareils et les aspects continus et discontinus de leurs fonctionnements.

Sur cette base, le système 1 selon l'invention envisage au travers des moyens de contrôle 10, de gérer l'autonomie et/ou le temps de rechargement de chaque appareil 6, en particulier des appareils autonomes 62.

Comme évoqué précédemment, ces derniers nécessitent un temps de chargement pour que leurs batteries atteignent un niveau de charge. A l'inverse, l'autonomie dépend dudit niveau de charge atteint, ainsi que de l'utilisation qui est faire de l'appareil 62.

On notera que le chargement s'opère par l'intermédiaire d'une connexion temporaire au réseau privatif, notamment par l'intermédiaire d'un branchement sur une prise électrique 70.

Ainsi, le système 1 s'occupe de gérer intelligemment, de façon dynamique, l'autonomie et/ou le rechargement de tels appareils 6, en particulier des appareils autonomes 62, en appliquant une jauge virtuelle dont l'incrémentation et la décrémentation de sa valeur est proportionnelle à un rapport entre son autonomie et/ou son temps de chargement, ainsi que du temps écoulé.

En outre, l'augmentation ou la diminution de la valeur de la jauge virtuelle de chaque appareil s'effectue en fonction de son autonomie (à savoir son cycle de fonctionnement pour un appareil connecté en permanence au réseau), qui peut dépendre elle-même de son temps de chargement (pour un appareil autonome fonctionnant sur batterie) et du temps écoulé de fonctionnement. En effet, il est évident que le niveau de charge d'une batterie est dépendant du temps pendant laquelle elle a été chargée et influe aussi du temps pendant lequel elle va fournir de l'électricité pour le fonctionnement de son appareil. Ces caractéristiques sont propres à chaque appareil en fonction de ses batteries.

En d'autres termes, les variations appliquées à la jauge d'un appareil prennent en considération l'autonomie d'un appareil, ainsi que pour un appareil fonctionnant sur batterie, cette autonomie en fonction du temps de chargement préalable de ses batteries, permettant de calculer son temps maximal de fonctionnement avant de nécessiter de nouveau un chargement desdites batteries.

On notera que le temps écoulé correspond à au moins une période temporelle donnée pendant lequel fonctionne chaque appareil 6.

Les changements appliqués à cette jauge virtuelle peuvent aussi dépendre du degré de priorité appliqué à l'appareil 6, et aussi des mesures de production et de consommation des autres appareils 6 sur une période donnée.

Plus précisément, différents modes peuvent être appliqués à une jauge. Ces modes peuvent être essentiellement, mais de façon limitative, au nombre d'au moins trois, à savoir : une augmentation jusqu'à la totalité de la jauge correspondant à une obligation de recharger l'appareil pour obtenir son autonomie maximale, une augmentation de manière à maintenir au minimum un niveau partiel de la jauge pour obtenir une autonomie minimale, ou bien un rechargement uniquement lorsque la jauge atteint son niveau le plus bas correspondant à un déchargement total des batteries dudit appareil 6.

On notera qu'une exception est réalisée concernant des appareils 6 dont le fonctionnement ne doit pas être interrompu. Dès lors, un seuil minimal de leur jauge virtuelle peut être appliqué, afin de le maintenir en fonctionnement.

D'autres modes alternatifs peuvent être envisagés au sein de l'augmentation partielle, comme définir des seuils en-deçà desquels la jauge ne doit descendre, par exemple 100, 75, 50 ou 25 %. En outre, une jauge dont le seuil est à 100 %, détermine un mode de fonctionnement toujours maximum, tandis qu'une jauge à 25 % (ou moins, pouvant aller jusque zéro) correspond à un fonctionnement jusqu'à un minimum ou jusqu'à déchargement total.

En outre, pour un appareil 6 connecté en permanence au réseau électrique, sa jauge peut être fixée de façon définitive à une valeur de 100 %. Elle peut aussi varier entre 0 et 100 % (ou inversement) de façon linéaire en fonction son temps de fonctionnement, par exemple depuis le début jusqu'à la fin d'un cycle. En d'autres termes, sa jauge augmente en fonction du temps de fonctionnement. A titre d'exemple, si l'appareil fonctionne pendant 1h40, sa jauge partant de 0 % peut augmenter de 1 % par minute, jusqu'au terme de son cycle, arrivant à 100 % à la fin. Cette valeur correspond alors virtuellement à un rechargement complet, l'appareil ne nécessitant plus d'être approvisionné puisque son cycle est terminé.

Ces modes peuvent être configurés par défaut et être modifiés par un utilisateur par l'intermédiaire des moyens de contrôle 10.

En particulier, une modification peut consister à définir pour un appareil spécifique, le seuil de sa jauge. A titre d'exemple, la jauge d'un ordinateur portable peut être paramétrée de sorte qu'elle n'atteigne jamais un seuil inférieur à 50 %, ou bien de ne jamais atteindre le rechargement maximum. Ce paramétrage peut être choisi par un utilisateur qui connaît l'autonomie et la durée pendant laquelle il aura besoin de son appareil, avant le rechargement. Ce peut être aussi le cas d'un aspirateur portatif autonome, dont le temps de fonctionnement est approximativement connu et il n'est donc pas nécessaire de le recharger complètement, puisque une autonomie moindre suffit pour réaliser un cycle de fonctionnement, à savoir le nettoyage de la surface à aspirer.

En d'autres termes, la jauge de chaque appareil peut prendre une valeur entre deux bornes : son seuil et sa borne maximale de 100 %.

En outre, un appareil qui reste branché plus longtemps que nécessaire, voit sa jauge bloquée au maximum, à savoir 100 %. A l'inverse, un appareil resté sans alimentation peut voir sa jauge descendre jusqu'à 0 % ou bien son seuil minimal.

De plus, il est possible de connaître la valeur de la jauge d'un appareil à tout moment, permettant de connaître son état de charge et/ou de fonctionnement.

De surcroît, l'invention prévoit d'effectuer des recalages par l'intermédiaire de signaux de rétrocontrôle. En d'autres termes, la jauge est directement ajustée jusqu'à une borne, son maximum, son minimum ou son seuil, en fonction de conditions détectées, comme par exemple un appareil qui est branché mais qui ne consomme pas d'électricité verrait sa jauge directement augmentée à 100 %, pour indiquer qu'il est en pleine charge ou bien qu'il a terminé son cycle de fonctionnement (qui n'a pas encore eu lieu). A titre d'exemple, dans le cas d'un frigo, si la température mesurée est celle configurée, alors la jauge est augmentée à 100 %, indiquant que l'appareil n'a plus à fonctionner et, par conséquent, plus à être alimenté.

Ledit système 1 peut comprendre une interface permettant de programmer l'un ou l'autre de ses aspects de fonctionnement, notamment les degrés de priorité et les modes de fonctionnement liés à chaque appareil 6. Une telle interface peut s'opérer par l'intermédiaire d'un portail virtuel, accessible au travers d'un réseau de communication, par exemple internet, auquel sont connectés lesdits moyens de contrôle 10. Ce portail virtuel enregistrera la marque, le modèle et les principales caractéristiques des différents appareils 6, afin de calculer des statistiques et de comparer les performances desdits appareils 6. Ces statistiques, qui peuvent regrouper toutes les données de tous les dispositifs connectés au portail virtuel, permettront de classer les appareils 6 selon leurs performances et de fournir une aide à la décision lors du calcul des jauges virtuelles, des scénarii ou au moment de l'acquisition ou du remplacement des appareils 6.

Par ailleurs, ledit système 1 peut envisager de sauvegarder les informations relatives aux périodes passées, de manière à programmer automatiquement un planning de fonctionnement des différents appareils 6. Un tel planning pourra être modifié en temps réel, en fonction des changements constatés dans le fonctionnement ou la nécessité de fonctionnement de divers appareils, mais surtout en fonction de la quantité mesurée d'énergie produite, notamment dépendant de l'ensoleillement pour le photovoltaïque ou du vent pour l'éolien.

Ces changements peuvent aussi intervenir suite à des paramètres extérieurs, comme l'évolution du prix de l'énergie dans une journée et dans l'année, la température, l'hygrométrie ou la pression atmosphérique. Ainsi, en cas de hausse ou de baisse significatives de la température, le système 1 pourra les prendre en considération pour modifier la période de fonctionnement des appareils de chauffage ou de climatisation.

De plus, plusieurs plannings peuvent être programmés pour la journée à venir sur la base de variations prévisionnelles de production et de consommation d'énergie. Ces variations sont calculées au moins à partir des variations prévisibles du prix de l'énergie et des prévisions météorologiques, ainsi que des appareils connectés au système 1 ou détectés sur le réseau privatif et dont la consommation est connue ou peut être estimée. Parmi ces plannings, le scénario ayant le rendement le plus optimisé est retenu ou le coût le plus bas, au moins sur une plage horaire donnée, en particulier pendant la période de production.

Par exemple, si les prévisions météorologiques prévoient une journée pluvieuse le lendemain, il sera plus économe de chauffer l'eau du cumulus en heures creuses la nuit que d'attendre un soleil qui ne viendra pas et qui obligera le système à utiliser l'électricité au moment où elle coute le plus cher.

En outre, en fin de journée, une analyse rétrospective est réalisée pour comparer le planning théorique avec le déroulement réellement écoulé. Cette analyse permet d'évaluer le planning, ou une partie du planning, en vue de lui conférer un degré de priorité si les mêmes conditions se présentent à nouveau.

Ainsi, le système 1 de gestion énergétique selon l'invention permet d'améliorer la consommation d'électricité d'un site 2 au regard de sa production.

En particulier, la figure 1 montre une mise en oeuvre dudit système 1 sur le même exemple que la figure A, schématisant la quantité horaire d'électricité consommée (en gris foncé) et la quantité horaire d'électricité produite (en gris clair). On constate un décalage quasiment total de la consommation d'électricité a été effectué depuis le soir et la nuit vers la journée pour coïncider avec la période journalière de production photovoltaïque. De plus, les pics de consommation ont été cumulés et lissés pour limiter la plage de consommation effective. Enfin, l'énergie produite sert, en quasi-totalité sur la période de production, à alimenter les besoins en électricité du site 2, diminuant sa dépendance au réseau d'approvisionnement 4.

## Revendications

1. Système (1) de gestion de la production et de la consommation d'électricité, sur un site (2) comprenant :
- des équipements (5) de production électrique reliés à une alimentation (3),
- des appareils (6) dont le fonctionnement génère une consommation électrique et reliés à ladite alimentation (3), comprenant des appareils autonomes (62) alimentés par des batteries rechargeables définis par une autonomie et un temps de chargement, et des appareils à fonctionnement continu ou discontinu nécessitant une connexion électrique permanente définis par une autonomie, l'autonomie correspondant à un cycle de fonctionnement, lesdits appareils (6) étant classés dans quatre catégories qui sont les suivantes:
a) les appareils (6) à utilisation régulière dont le fonctionnement est soumis directement à une action d'un utilisateur et ne peut être décalé dans le temps ;
b) les appareils (6) à utilisation ponctuelle dont le fonctionnement peut être décalé dans le temps d'un faible laps temporel et soumis à l'action de l'utilisateur ;
c) les appareils (6) à utilisation prolongée dont le fonctionnement peut être totalement décalé dans le temps et réparti sur des plages horaires totalement différentes ;
d) les appareils (6) dont l'utilisation permet d'emmagasiner de l'énergie et de stocker ladite énergie au moins provisoirement,
ces différentes catégories permettant de classer les appareils en fonction de leur degré de priorité de fonctionnememt ;
ledit système (1) comprenant :
- des capteurs (80) de mesure de la quantité d'électricité produite par chaque équipement (5) de production électrique,
- des actionneurs (9) de mesure de la quantité d'électricité consommée par chaque appareil (6), lesdits actionneurs (9) étant pourvus de moyens de variation de la puissance sur une période de chaque appareil (6),
- des moyens (10) de contrôle de façon indépendante des moyens de variation de chacun desdits actionneurs (9), lesdits moyens de contrôle (10) envoyant vers les moyens de variation de chaque actionneur (9) des commandes de variation de la puissance de chaque appareil (6) sur une période, ladite puissance et ladite période (6) étant déterminées en fonction de la quantité mesurée d'électricité produite par rapport à la quantité mesurée d'électricité consommée, ainsi qu'en fonction des degrés de priorités,
- lesdits moyens de contrôle (10) étant aptes à gérer l'autonomie des appareils (6) nécessitant une connexion électrique permanente et à gérer l'autonomie et le temps de chargement des appareils autonomes (62) en appliquant une jauge virtuelle pour connaître l'état de charge et/ou de fonctionnement de chaque appareil (6) à un moment donné, l'augmentation ou la diminution de la valeur de ladite jauge virtuelle s'effectuant en fonction du degré de priorité appliqué à chaque appareil (6), des mesures de production et de consommation d'électricité sur une période donnée, et en fonction soit de l'autonomie d'un appareil (6) nécessitant une connexion électrique permanente soit de l'autonomie dépendant du temps de chargement d'un appareil autonome (62), et du temps écoulé de fonctionnement, ladite jauge dépendant en outre d'au moins une catégorie auquel l'appareil (6) est affilié et d'au moins un aspect de fonctionnement continu ou discontinu dudit appareil (6) ;
ledit système (1) étant apte à gérer, lorsque la production par les équipements (5) dépasse la consommation par les appareils (6) dont le fonctionnement génère une consommation électrique, le déclenchement d'au moins un appareil (60, 61) à même de consommer un surplus d'électricité, et de la stocker sous une forme énergétique différente, en particulier sous forme de chaleur notamment d'eau chaude, voire de glace, sous forme de gaz comprimé,
et, pour les appareils autonomes (62), au moins trois modes peuvent être appliqués à une jauge virtuelle :
- une augmentation jusqu'à la totalité de la jauge correspondant à une obligation de recharger l'appareil pour obtenir son autonomie maximale,
- une augmentation de manière à maintenir au minimum un niveau partiel de la jauge pour obtenir une autonomie minimale,
- ou bien un rechargement uniquement lorsque la jauge atteint son niveau le plus bas correspondant à un déchargement total des batteries dudit appareil.

2. Système (1) de gestion de la production et de la consommation d'électricité selon la revendication 1 dans lequel ledit appareil (60, 61) à même de consommer un surplus d'électricité est un ballon accumulateur d'eau chaude (60) ou un réfrigérateur (61).

3. Système (1) de gestion de la production et de la consommation d'électricité selon l'une quelconque des revendications précédentes dans lequel lesdits actionneurs (9) et lesdits capteurs (8) comprennent des moyens de communication avec lesdits moyens de contrôle au travers d'un réseau sans fil, d'un réseau filaire indépendant ou bien par courants porteurs en ligne.

## Patentansprüche

1. System (1) zur Verwaltung der Erzeugung und des Verbrauchs von Elektrizität an einem Standort (2), umfassend:
- Stromerzeugungsausrüstungen (5), die an einer Stromversorgung (3) angeschlossen sind,
- Geräte (6), deren Betrieb einen Energieverbrauch erzeugt und die an der Stromversorgung (3) angeschlossen sind, die autonome Geräte (62), die durch wiederaufladbare Batterien mit Strom versorgt werden, die durch eine Betriebsdauer und eine Ladedauer definiert sind, und kontinuierlich oder diskontinuierlich betriebene Geräte, die eine permanente elektrische Verbindung erfordern, die durch eine Betriebsdauer definiert sind, wobei die Betriebsdauer einem Betriebszyklus entspricht, umfassen, wobei die Geräte (6) in vier Kategorien eingeteilt sind, die wie folgt sind:
a) regelmäßig verwendete Geräte (6), deren Betrieb unmittelbar einer Benutzeraktion ausgesetzt ist und nicht zeitlich versetzt werden kann;
b) pünktlich verwendete Geräte (6), deren Betrieb zeitlich um eine kleine Zeitperiode versetzt werden kann und der der Benutzeraktion ausgesetzt ist;
c) während einer längere Periode verwendete Geräte (6), deren Betrieb vollständig zeitlich versetzt werden kann und sich über völlig unterschiedliche Zeitfenster erstreckt:
d) Geräte (6), deren Verwendung es erlaubt, die Energie zu speichern und die besagte Energie zumindest vorübergehend zu speichern,
diese verschiedenen Kategorien erlauben es, die Geräte nach ihrem Grad der Betriebspriorität einzuteilen;
wobei das besagte System (1) Folgendes umfasst:
- Sensoren (80) zum Messen der von jeder Stromerzeugungsausrüstung (5) erzeugten Strommenge,
- Aktuatoren (9) zum Messen der von jedem Gerät (6) verbrauchten Strommenge, wobei die Aktuatoren (9) mit Mitteln zum Variieren der Leistung über eine Zeitperiode jedes Gerats (6) versehen sind,
- Mittel (10) zur unabhängigen Steuerung der Variierungsmitteln jedes der besagten Aktuatoren (9), wobei die besagten Steuermittel (10) Steuerbefehle zum Variieren der Leistung jedes Geräts (6) an die Variierungsmittel jedes Aktuators (9) senden, wobei die besagte Leistung und die besagte Zeitperiode (6) je nach der gemessenen erzeugten Strommenge in Bezug auf die gemessene verbrauchte Strommenge, sowie je nach den Prioritätsgraden bestimmt werden,
- wobei die besagten Steuermittel (10) in der Lage sind, die Betriebsdauer der Geräte (6), die eine permanente elektrische Verbindung erfordern, zu verwalten, und die Betriebsdauer und die Ladezeit der autonomen Geräte (62) durch Anwenden eines virtuellen Messstabs zu verwalten, um den Lade- und/oder Betriebszustand jedes Geräts (6) zu einem gegebenen Zeitpunkt zu kennen, wobei die Erhöhung oder die Verninderung des Werts des besagten virtuellen Messstabs je nach dem für jedes Gerät (6) angewandten Prioritätsgrad, den Messungen der Erzeugung und des Verbrauchs von Elektrizität während einer gegebenen Zeitperiode und abhängig von entweder der Betriebsdauer eines Geräts (6), das eine permanente elektrische Verbindung erfordert, oder der Betriebsdauer, die von der Ladezeit eines autonomen Geräts (62) und von der verstrichene Betriebsdauer abhängig ist, wobei der besagte Messstab außerdem von mindestens einer Kategorie, zu der das Gerät (6) gehört, und von mindestens einem Aspekt des kontinuierlichen oder diskontinuierlichen Betriebs des besagten Geräts (6) abhängig ist, bewirkt wird;
wobei das besagte System (1) in der Lage ist, wenn die Erzeugung durch die Ausrüstungen (5) den Verbrauch durch die Geräte (6), deren Betrieb einen elektrischen Verbrauch erzeugt, überschreitet, das Einschalten von mindestens einem Gerät (60, 61), das in der Lage ist, einen Stromüberschuss zu verbrauchen, zu verwalten, und diesen in einer unterschiedlichen energetischen Form, insbesondere in der Form von Wärme, nämlich von Heißwasser, sogar von Eis, in der Form von komprimiertem Gas, zu speichern,
und für die autonomen Geräte (62) können mindestens drei Modi auf einen virtuellen Messstab angewendet werden:
- eine Erhöhung bis zum vollständigen Messstab, die der Verpflichtung entspricht, das Gerät wieder aufzuladen, um seine maximale Betriebsdauer zu erreichten,
- eine Erhöhung, so dass zumindest ein Teilniveau des Messstabs aufrechterhalten bleibt, um eine minimale Betriebsdauer zu erreichen,
- oder eine Wiederaufladung nur dann, wenn der Messstab sein niedrigsten Niveau erreicht, das einer völligen Entladung der Batterien des besagten Gerätes entspricht.

2. System (1) zur Verwaltung der Erzeugung und des Verbrauchs von Elektrizität nach Anspruch 1, bei dem das besagte Gerät (60, 61), das in der Lage ist, einen Stromüberschuss zu verbrauchen, ein Warmwasserspeicher (60) oder ein Kühlschrank (61) ist.

3. System (1) zur Verwaltung der Erzeugung und des Verbrauchs von Elektrizität nach irgendeinem der vorhergehenden Ansprüche, bei dem die besagten Aktuatoren (9) und die besagten Sensoren (8) Mittel zur Kommunikation mit den Steuermitteln über ein drahtloses Netzwerk, ein unabhängiges verkabeltes Netzwerk oder PLC-basiert umfassen.

## Claims

1. System (1) for managing the production and consumption of electricity on a site (2), comprising:
- power production equipment (5) connected to a power supply (3),
- devices (6) the operation of which generates a power consumption and connected to said power supply (3), comprising stand-alone devices (62) powered by rechargeable batteries defined by an operating life and a recharging time, and continuously or discontinuously operating devices requiring a permanent electrical connection defined by an operating life, the operating life corresponding to a cycle of operation, said devices (6) being classified into four categories, which are as follows:
a) the regularly used devices (6) the operation of which is directly subject to an action by a user and cannot be shifted in time;
b) the punctually used devices (6) the operation of which can be shifted in time by a small time period and subject to the action by the user;
c) the devices (6) used for an extended time period the operation of which can be completely shifted in time and spread over completely different time ranges;
d) the devices (6) the use of which permits to store energy and to store said energy at least temporarily,
these different categories permitting to classify the devices depending on their degree of operating priority;
said system (1) comprising:
- sensors (80) for measuring the quantity of electricity produced by each power production equipment (5),
- actuators (9) for measuring the quantity of electricity consumed by each device (6), said actuators (9) being provided with means for varying the power over a period of time of each device (6),
- means (10) for independently controlling the variation means of each of said actuators (9), said control means (10) sending to the variation means of each actuator (9) control commands for varying the power of said each device (6) over a period of time, said power and said period of time (6) being determined depending on the measured quantity of electricity produced with respect to the measured quantity of electricity being consumed, as well as depending on the degrees of priority,
- said control means (10) being capable of managing the operating life of the devices (6) requiring a permanent electrical connection and of managing the operating life and recharging time of the stand-alone devices (62) by applying a virtual gauge in order to know the state of charge and/or of operation of each device (6) at a given time instant, the increase or decrease of the value of said virtual gauge being performed depending on the degree of priority applied to each device (6), the measurements of production and consumption of electricity over a given period of time, and depending on either the operating life of a device (6) requiring a permanent electrical connection or the operating life depending on the recharging time of a stand-alone device (62), and on the elapsed time of operation, said gauge further depending on at least one category, which the device (6) belongs to and at least one aspect of continuous or discontinuous operation of said device (6);
said system (1) being capable of managing, when the production by the equipment (5) exceeds the consumption by the devices (6) the operation of which generates an electrical consumption, the switching-on of at least one device (60, 61) capable of consuming a surplus of electricity, and of storing it in a different energetic form, in particular in the form of heat, namely of hot water, even of ice, in the form of compressed gas,
and, for the stand-alone devices (62), at least three modes can be applied to a virtual gauge:
- an increase up to the full level of the gauge corresponding to an obligation of recharging the device in order to obtain its maximum operating life,
- an increase so as to maintain at a minimum a partial level of the gauge in order to obtain a minimum operating life,
- or recharging only when the gauge reaches its lowest level corresponding to a complete discharging of the batteries of said device.

2. System (1) for managing the production and consumption of electricity according to claim 1, wherein said device (60, 61) capable of consuming a surplus of electricity is a hot-water storage tank (60) or a refrigerator (61).

3. System (1) for managing the production and consumption of electricity according to any one of the preceding claims, wherein said actuators (9) and said sensors (8) comprise means for communicating with said control means through a wireless network, an independent wired network or a power line.
